(19) Europäisches Patentamt
European Patent Office
Office européen des brevets

(11) EP 3 502 063 A1

(12) EUROPEAN PATENT APPLICATION

(43) Date of publication:
**26.06.2019 Bulletin 2019/26**

(21) Application number: **17208355.2**

(22) Date of filing: **19.12.2017**

(51) Int Cl.:
***C02F 3/12*** *(2006.01)* ***C02F 3/34*** *(2006.01)*
*C02F 1/461* *(2006.01)* *C02F 103/34* *(2006.01)*
*C02F 101/34* *(2006.01)* *C02F 101/38* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Covestro Deutschland AG**
**51373 Leverkusen (DE)**

(72) Inventors:
- **HECKROTH, Heike**
  **51519 Odenthal (DE)**
- **WEBER, Rainer**
  **51519 Odenthal (DE)**
- **HERWIG, Christoph**
  **1130 Wien (AT)**
- **MAHLER, Nicole**
  **1050 Wien (AT)**

(74) Representative: **Levpat**
**c/o Covestro AG**
**Gebäude 4825**
**51365 Leverkusen (DE)**

# (54) CONTINUOUS METHOD FOR REDUCING THE AMOUNT OF ORGANIC COMPOUNDS IN WASTEWATER

(57) The present invention relates to a method for reducing the amount of organic compounds in wastewater, comprising providing a wastewater comprising NaCl in a concentration of at least 6% (w/v), contacting said hypersaline wastewater with a halophilic microorganism, and reducing the amount of organic compounds by said halophilic microorganism in the presence of at least one substrate which has been added to the wastewater and which allows for the growth of said halophilic microorganism, wherein the reduction of the amount of organic components is carried out as a continuous process in bioreactor.

Fig. 1

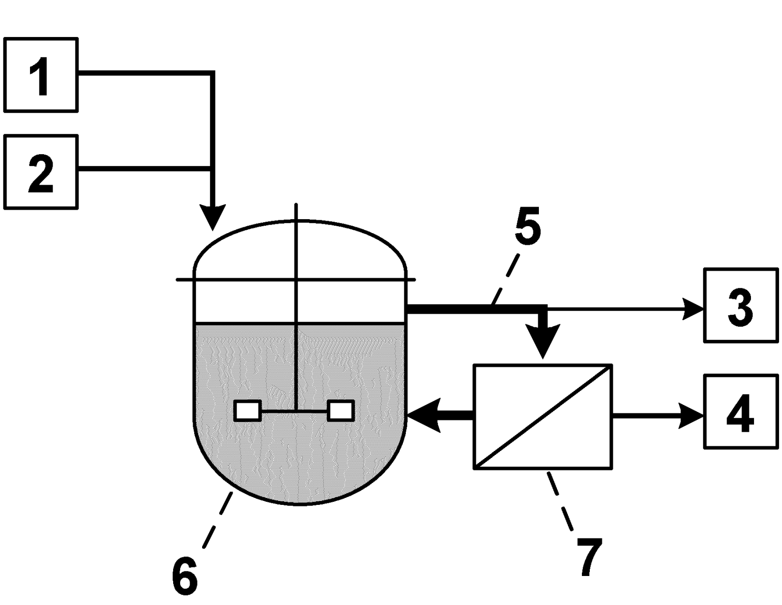


EP 3 502 063 A1

**Description**

FIELD OF THE INVENTION

The present invention relates to a method for reducing the amount of organic compounds in wastewater, comprising providing a wastewater comprising NaCl in a concentration of at least 6% (w/v), contacting said hypersaline wastewater with a halophilic microorganism, and reducing the amount of organic compounds by said halophilic microorganism in the presence of at least one substrate which has been added to the wastewater and which allows for the controlled continuous growth of said halophilic microorganism, wherein the reduction of the amount of organic components is carried out as a continuous process in bioreactor. The present invention also relates to a bioreactor comprising a hypersaline wastewater and at least one substrate which allows for the growth of cells of Haloferax mediterranei, wherein the biomass concentration of the cells of Haloferax mediterranei in the wastewater is a least 10 g/l. Furthermore, the present invention relates to a system comprising a bioreactor comprising a hypersaline wastewater and cells of at least one halophilic microorganism, said bioreactor being connected to a cell retention device which allows for continuously separating the cells from the wastewater to obtain a filtrate of treated wastewater, wherein said cell retention device is connected to a device allowing for sodium chloride electrolysis

BACKGROUND OF THE INVENTION

Today more than 50 % of the chemicals produced depend on electrolysis of NaCl for production of chlorine and sodium hydroxide - which makes sodium chloride one of the most important basic reagents in the chemical industry. Instead of cost and energy consuming disposal of saline wastewater, it should be aimed to return it to industrial production chain. Recycling saline wastewater does not only mean saving the environment from salt pollution but also means saving resources by reducing raw material costs. In this way recycling of NaCl is a beneficial approach for both economical and ecological reasons.

What is preventing the industry so far to use the saline wastewater in electrolysis plants are the organic impurities that are contained in industrial saline wastewaters. The most common process of electrolysis uses a membrane cell that is very sensitive to pollutants. Membrane suppliers state strict requirements for residual amounts of organic carbon in the saline liquid and claim a threshold of 3-4 ppm total organic carbon (TOC). Industrial wastewater usually exceeds that threshold by orders of magnitude.

Physical and/or chemical methods that are used to treat residual water containing organic compounds, are often not able to reduce the total organic carbon content in the salty residual streams down to the required maximum level. The residual waters (such as the wastewater from production of di- and polyamines of the diphenylmethane series) often comprise organic pollutants such as formate, phenol, aniline, nitrobenzene and 4,4'-Methylenedianiline (MDA) and are either brought into the environment after considerable dilution with fresh water or they are treated by physico-chemical methods. Thus, alternative treatment options for hypersaline wastewater are required.

Alternative systems for the treatment of organic matter by aerobic and anaerobic biological treatments are currently a major research focus. Conventional non-extremophilic microorganisms are not able to perform the removal of organic pollutants at high salt concentrations. The ability of halophilic bacteria to degrade or transform different organic pollutants in the presence of high salt concentrations when salt stress is superimposed on pollution stress is of great importance.

Typical organic pollutants found in hypersaline wastewater are formate, phenol, aniline, nitrobenzene and 4,4'-Methylenedianiline (MDA). These chemical intermediates are often used in the manufacturing of herbicides, developers, perfumes, medicine, rubber and dyes.

Due to their expanded use in industry, growing amounts of these compounds are being released into the soil and water bodies which poses an environmental threat and health risk to living organisms.

Oren et al (2014) reported that Haloferax mediterranei is metabolically very versatile and has a wide salt tolerance. According to the authors Haloferax mediterranei is an archaeon that grows faster than any other, comparable extreme halophile, has a wide window for salt tolerance, can grow on simple as well as on complex substrates and degrade polymeric substances, has different modes of anaerobic growth, can accumulate storage polymers, produces gas vesicles, and excretes halocins capable of killing other Archaea (Oren, A et al.. Microbial weeds in hypersaline habitats: the enigma of the weed-like Haloferax mediterranei. FEMS microbiology letters 359.2 (2014): 134-142).

Advantageously, a continuous process for the reduction of total organic carbon and/or contaminants in hypersaline water has been established in the studies underlying the present invention. The continuous process uses halophilic archaea in a bioreactor which is linked to a membrane module for cell retention to achieve a high cell density culture. A substrate is added to the wastewater which enables the process to be run stably and continuously. The process steady state can be controlled by the three process parameters (i) concentration of co-substrate, (ii) recirculation rate and (iii) dilution rate. Advantageously, the process can be scaled up from lab-scale to pilot and industrial scale and is applicable

for different reactor systems such as stirred tank reactors, bubble columns and airlift reactors.

So far, studies on extreme halophilic cultures are mainly limited to shake flasks (Alsafadi et al., N Biotechnol. 34 (2017) 47-53. and Bhattacharyya et al., AMB Express. 2 (2012) 34) and bioreactors with a volume of 1 to 10 L operated in batch or fed-batch mode (F.F. Hezayen et al., Appl Microbiol Biotechnol. 54 (2000) 319-325, or T.-Y. Huang et al., J IND MICROBIOL BIOTECHNOL. 33 (2006) 701-706, or P.-J.R.S. Yi-Hsu Ju et al, Journal of Microbial & Biochemical Technology. 07 (2015)). Cultivation in larger scale was presented by Koller, who showed PHA production by Haloferax mediterranei in a 300 L bioreactor (M. Koller International Journal of Polymer Science. 2015 (2015) e370164. doi:10.1155/2015/370164). However, the process was operated in batch mode leading to down times for loading, unloading and, cleaning.

Lee et al. showed a continuous cultivation of the extreme halophilic archeon Halobacterium salinarum. The authors used a cell retention system for high cell density production of bacteriorhodopsin (S.Y. Lee et al.,Biotechnology Letters. 20 (1998) 763-765). The cells were continuously supplied with fresh medium. However, the authors used a system with total cell retention (R=1).

A different, but also continuous approach was presented by Fallet et al. for the moderately halophilic bacterium Chromohalobacter salexigens (Fallet et al., Biotechnol. Bioeng. 107 (2010) 124-133). The authors used a cascade of 2 bioreactors connected in series. In the first one biomass is grown continuously in a system with cell retention. The culture broth (bleed stream) is pumped into the second fermenter, where the cells are subjected to a defined hypo-osmotic shock by mixing with distilled water for secretion of the products ectoine and hydroxyectoine. Cultivation was described as steady state condition, allowing a continuous growth of the cells.

Also, Lorantfy et al. used a STR reactor connected to a membrane module for continuous cultivation of extremophilic cultures (Loranty et al., Investigation of physiological limits and conditions for robust bioprocessing of an extreme halophilic archaeon using external cell retention system, Biochemical Engineering Journal. 90 (2014) 140-14). The authors showed steady state conditions with Haloferax mediterranei by defined feed and bleed balancing strategies. Lorantfy et al. could reach different setpoints for biomass concentration by varying dilution rate and retention rate. Lorantfy et al. could reach different setpoints for biomass concentration by varying dilution rate and retention rate. Maximum biomass concentration in the cited document was 5 g/L

WO 2013/124375 discloses the reduction of total organic carbon by certain halophilic and/or haloalkaliphilic microorganisms in highly saline waste streams. Organic components present in the wastewater such as propane-1,2,3-triol, acetates can be metabolized by halophilic and/or haloalkaliphilic cells to form new biomass. The TOC in the wastewater described in WO 2013/124375 was relatively high (more than 400 ppm). Therefore, it was not required to add an additional carbon source allowing for the growth of the microorganisms as a sufficient amount of glycerol was contained in the brine. The described process, however, is not applicable for wastewaters that contain organic components the cells cannot utilize to form biomass or for wastewaters that contain lowest amounts of organic components. Furthermore, the process described in the Examples of WO 2013/124375 was carried out at relatively low dilution rates of 0.011 - 0.044 $h^{-1}$ which makes the process less useful for larger industrial processes.

## BRIEF SUMMARY OF THE PRESENT INVENTION

The present invention relates to a continuous method for reducing the amount of organic compounds in wastewater. Compared to conventional batch or fed-batch cultivation, continuous processing shows advantages, such as high-volumetric productivity, reduced equipment size and reduced capital costs. There is a rising interest in industrial and academic research in the development of continuous processing systems.

In particular, the present invention relates to a method for reducing the amount of organic compounds in wastewater, comprising

(a) providing or obtaining a wastewater comprising NaCl in a concentration of at least 6% (w/v),
(b) contacting said hypersaline wastewater with a halophilic microorganism, and
(c) reducing the amount of organic compounds by said halophilic microorganism in the presence of at least one substrate which has been added to the wastewater and which allows for the continuous growth of said halophilic microorganism,
wherein the reduction of the amount of organic components is carried out as a continuous process in bioreactor.

In an embodiment of the present invention, the halophilic microorganism is an extremely halophilic microorganism.

In an embodiment of the present invention, the halophilc microorganism is Haloferax mediterranei.

In an embodiment of the present invention, the biomass concentration in the bioreactor is at least 10 g/l. Preferably, the biomass concentration in the bioreactor is 20 g/l to 40 g/l.

In an embodiment of the present invention, the bioreactor is connected with a cell separation device which

continuously separates the cells of the halophilic microorganism to obtain a filtrate of the treated wastewater, Preferably, the cell separation device comprises a filter, in particular a membrane filter, which allows for the continuous separation of the cells of the halophilic microorganism from the first portion of the treated wastewater to obtain a filtrate of the treated wastewater.

In a preferred embodiment of the present invention, total organic content (TOC) of the hypersaline wastewater obtained or provided in step a) is lower than 400 mg/l. Other preferred TOC contents are disclosed elsewhere herein.

In a preferred embodiment of the present invention, the continuous process is controlled by the following parameters (i) concentration of the at least one substrate, (ii) recirculation rate R and (iii) dilution rate D. The parameters are defined elsewhere herein.

In an embodiment of the present invention, the recirculation rate R is 0.9 to 0.99, in particular 0.9 to 0.95.

In a preferred embodiment of the present invention, the dilution rate D is equal to or larger than 0.05 $h^{-1}$. Preferably, the dilution rate is equal to or larger than 0.1 $h^{-1}$.

In a preferred embodiment of the present invention, the process is, i.e. the continuous process is carried out under conditions which allow for a growth rate $\mu$ of the halophilic microorganism of larger than 0.008 $h^{-1}$, in particular of larger than 0.015 $h^{-1}$.

In a preferred embodiment of the present invention, the substrate is a carbohydrate, in particular the substrate is selected from glycerol, acetate, glucose, sucrose, lactate, malate, succinate, and citrate.

In a preferred embodiment of the present invention, the wastewater is derived from the production of diaryl carbonates, the production of polycarbonates, or the production of diamines and polyamines of the diphenylmethane series.

In a preferred embodiment of the present invention, the bioreactor has a volume of at least 100 l, in particular, wherein the bioreactor has a volume of least 1000 l.

In a preferred embodiment of the present invention, the continuous process is carried out over a period of at least one week.

In a preferred embodiment of the method of the present invention, the amount of at least one organic compound selected from the group consisting of nitrobenzene, formate, phenol, methylenedianiline, in particular 4,4'-Methylenedianiline (MDA), and aniline is reduced. Additionally or alternatively, the amount of total organic carbon (TOC) is reduced.

In a preferred embodiment of the method of the present invention, the amount of the at least one organic compound and/or of the total organic carbon is reduced by at least 30%, at least 50%, at least 70%, by least 90%, or by at least 95%.

In a preferred embodiment of the method of the present invention, the treated wastewater is concentrated after separation of the cells from the wastewater.

In a preferred embodiment of the method of the present invention, the method further comprises the step of subjecting the treated wastewater or the concentrated treated wastewater to sodium chloride electrolysis, thereby producing chlorine and sodium hydroxide and optionally hydrogen.

In a preferred embodiment of the method, bioreactor or the system of the present invention, the sodium chloride electrolysis is selected from membrane cell electrolysis of sodium chloride, in particular membrane electrolysis using oxygen consuming electrodes and diaphragm cell electrolysis of sodium chloride.

In a preferred embodiment of method, bioreactor or system of the present invention, the bioreactor is connected to a device allowing for sodium chloride electrolysis.

In a preferred embodiment, the bioreactor as set forth herein comprises a hypersaline wastewater and at least one substrate which allows for the growth of cells of Haloferax mediterranei, wherein the biomass concentration of the cells of Haloferax mediterranei in the wastewater is a least 10 g/l. Also it is envisaged that the biomass concentration is at least 20 g/l.

In a preferred embodiment, the bioreactor as set forth herein comprises at least 1000 l hypersaline wastewater.

In a preferred embodiment, the the bioreactor is connected, i.e. operably linked to a cell retention device which allows for continuously separating the cells from the wastewater to obtain a filtrate of treated wastewater. Alternatively or additionally, the bioreactor is connected to a device allowing for sodium chloride electrolysis.

The present invention also relates to a purification system comprising a bioreactor comprising a hypersaline wastewater and cells of at least one halophilic microorganism, said bioreactor being connected to a cell retention device which allows for continuously separating the cells from the wastewater to obtain a filtrate of treated wastewater, wherein said cell retention device is connected to a device allowing for sodium chloride electrolysis of the treated wastewater.

## DETAILED SUMMARY OF THE PRESENT INVENTION - DEFINITIONS

Accordingly, the present invention relates to a method for reducing the amount of organic compounds in wastewater comprising

(a) providing or obtaining a wastewater comprising NaCl in a concentration of at least 6% (w/v),
(b) contacting said wastewater with a halophilic microorganism, and
(c) reducing the amount of organic compounds by said halophilic microorganism in the presence of at least one substrate which has been added to the wastewater and which allows for the growth of said halophilic microorganism,

wherein the reduction of the amount of organic components is carried out as a continuous process in bioreactor.

In accordance with the method of the present invention, the amount of organic compounds shall be reduced in wastewater comprising organic compounds. The wastewater shall be hypersaline wastewater, i.e. wastewater having a high concentration of NaCl. A high concentration of NaCl as referred to herein is, preferably, a concentration of at least 6% (w/v), more preferably a concentration of at least 10%, even more preferably of at least 12% (w/v), and most preferably of at least 15% (w/v) based on the total volume of the wastewater. Preferably, a high concentration of NaCl is a concentration of NaCl of at least 10% (w/v), more preferably of at least 12% (w/v), and most preferably of at least 15% (w/v) based on the total volume of the wastewater.

The wastewater may comprise NaCl in a concentration up to the saturation concentration of NaCl. Thus, the upper limit for the concentration is, in principle, the saturation concentration of NaCl. Thus, a high concentration of NaCl is e.g. a concentration of 10% up to 25% (w/v) based on the total volume of the wastewater.

In a preferred embodiment of the method of the present invention, the wastewater comprises NaCl in a concentration of 10% to 25% (w/v). In another preferred embodiment, the wastewater comprises NaCl in a concentration of 15% to 25% (w/v). In another preferred embodiment, the wastewater comprises NaCl in a concentration of 17% to 25% (w/v), again based on the total volume of composition or wastewater.

In accordance with the present invention, the wastewater is not brackish water or seawater which both have much lower concentrations of NaCl.

High concentrations of NaCl as set forth above can be found in various industrial wastewaters. Thus, the wastewater is preferably industrial wastewater comprising organic compounds such as industrial brine.

In a preferred embodiment of the method of the present invention, the (industrial) wastewater has been isolated, i.e. is derived from methylene diamine production, in particular from production of diamines and polyamines of the diphenylmethane series (as a preproduct of polyurethanes).

In another preferred embodiment of the present invention, the hypersaline wastewater has been isolated, i.e. is derived from the production of polycarbonates.

In another preferred embodiment of the present invention, the hypersaline wastewater has been isolated, i.e. is derived of the production of diaryl carbonates such as diphenyl carbonates.

Accordingly, step a) of the method of the present invention may comprise the step of obtaining, in particular of isolating the wastewater from methylene diamine, polycarbonate, or diaryl carbonate production.

As set forth above, the wastewater can be obtained from the production of diamines and polyamines of the diphenylmethane series. The term "diamines and polyamines of the diphenylmethane series, refers to amines and mixtures of amines of the following type:

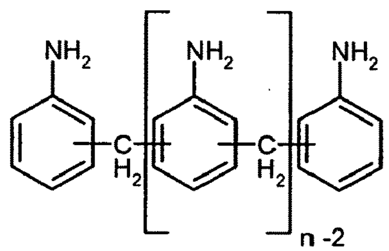

wherein n is an integer of 2 or larger than 2.

Diamines and polyamines of the diphenylmethane series are preproduct of polyurethanes and can be produced by well known methods. Preferred methods of the production of said diamines and polyamines the diphenylmethane series are e.g. disclosed in EP 1 813 598 A1 which herewith is incorporated by reference in its entirety.

In an embodiment, the production of di- and polyamines of the diphenylmethane series is carried out by reacting aniline and formaldehyde in the presence of an acid catalyst. In an embodiment, hydrochloric acid is used as acid catalyst. After producing the diamines and polyamines from the diphenylmethane series, the acid catalyst is neutralized by addition of sodium hydroxide. Preferably, the addition of the neutralizing agent is carried out so that the resulting neutralization mixture can be separated into an organic phase containing the diamines and in particular the polyamines of the diphenylmethane series and excess aniline and an aqueous phase. The aqueous phase is the hypersaline wastewater containing organic compounds as set forth herein.

As set forth above, the wastewater can be obtained from the production of diaryl carbonates. The production

of diaryl carbonates, and more particularly diphenyl carbonates, generally takes place by a continuous process, by the production or introduction of phosgene and subsequent reaction of monophenols and phosgene in an inert solvent in the presence of alkali and a nitrogen catalyst at the reaction interface. The production of diaryl carbonates is well known in the art. Preferred production methods are described in US2008/053836, the entire contents of which are incorporated herein by reference.

Further, the hypersaline wastewater may have been isolated, i.e. is derived of the production of chloropren, hydrazine, or epichlorhydrin.

In an embodiment of the method of the present invention, the hypersaline wastewater has been subjected to one or more purification step(s) prior to carrying out the method of the present invention. The one or more purification step(s) preferably allows for reducing the amount of solvent residues in the wastewater. This can be e.g. achieved by stripping off the wastewater with steam and/or treatment with adsorbents, in particular with active carbon. Further, the wastewater might have been filtered. Moreover, the hypersaline wastewater may have been purified by treatment of wastewater using ozone (ozonation). Ozonation (also referred to as ozonization) is a chemical water treatment technique based on the infusion of ozone into water (see e.g. WO2000078682). Accordingly, the one or more purification steps are preferably stripping off the wastewater with steam, treating, i.e. purifying the wastewater with an adsorbent, in particular with active carbon, filtering the wastewater and/or subjecting the wastewater to ozonation.

Further, it is envisaged that the NaCl concentration of the wastewater is concentrated prior to carrying out step a) of the method of the present invention, e.g. by membrane distillation process, osmotic distillation or reverse-osmosis, Further, preferred methods for concentrating a composition comprising NaCl are described elsewhere herein.

The wastewater provided in step a) of the method of the present invention shall comprise organic compounds. The amount of the organic compounds shall be reduced.

In a preferred embodiment, the amount of total organic carbon (TOC) shall be reduced. TOC is the total concentration of carbon contained in organic molecules in a sample. Thus, the expression "reducing the amount of organic compounds" preferably refers to the reduction of the amount of total organic carbon. TOC can be measured by methods well known in the art. In an embodiment, the TOC value is determined by high temperature catalytic oxidation. The organic carbon in the sample is oxidized by using a platin catalyst. The generated carbon dioxide gas is measured by a Nondispersive Infrared (NDIR) detector.

Further, the expression may refer to the reduction of the amount of one or more than one specific compounds, i.e. specific contaminants, comprised by the wastewater. Preferably, the organic compound is selected from the group consisting of nitrobenzene, formate, phenol, methylenedianiline, in particular 4,4'-Methylenedianiline (MDA), and aniline. The wastewater may comprise one, two, three, four, or five, i.e. all of the aforementioned compounds. Accordingly, the method of the present invention preferably allows for the reduction of the amount of one or more of these compounds.

The amount of the organic compounds, i.e. of the one or more than one organic compound and/or of the total organic carbon comprised by the wastewater shall be reduced by carrying out the method of the present invention. The term "reducing" as used herein refers to a significant reduction of the amount, in particular of the total amount of the organic compounds. Preferably, the term denotes a reduction at least 30%, at least 50%, at least 70% or in particular of at least 90% or of at least 95% of the total amount of present in the wastewater. Accordingly, the total amount of the organic compounds in the wastewater shall be reduced by at least 30%, at least 50%, at least 70% or in particular by at least 90% by of at least 95%.

The concentrations of the compounds in the wastewater provided in step a) of the method of the present invention, i.e. the untreated wastewater, and are preferably as follows.

<u>Aniline</u>

Preferably, the wastewater provided in step a) comprises aniline in an amount of at least 0.5 mg/l, more preferably in an amount of at least 2 mg/l, and most preferably in an amount of at least 5 mg/l. Further, it is envisaged that the wastewater comprises aniline in an amount of at least 10 mg/l, in particular in an amount of at least 20 ml/l.

Also preferably, the hypersaline wastewater comprises aniline in an amount of 1 to 100 mg/l, more preferably, in an amount of 2 to 50 mg/l, and most preferably in an amount of 2 to 20 mg/l. Further, it is envisaged that it comprises aniline in an amount of 2 to 12 mg/l.

<u>Formate:</u>

Preferably, the hypersaline wastewater comprises formate in an amount of at least 10 mg/l, more preferably in an amount of at least 30 mg/l, and most preferably in an amount of at least 100 mg/l.

Also preferably, the hypersaline wastewater comprises formate in an amount of 10 mg/l to 10 g/l, more preferably, in an amount of 30 mg/l to 1 g/l, and most preferably in an amount of 50 to 500 mg/l.

Nitrobenzene

Preferably, the wastewater comprises nitrobenzene in an amount of at least 1 mg/l, more preferably in an amount of at least 5 mg/l, and most preferably in an amount of at least 10 mg/l.

Also preferably, the wastewater comprises nitrobenzene in an amount of 1 to 100 mg/l, more preferably, in an amount of 2 to 50 mg/l, and most preferably in an amount of 2 to 20 mg/l.

4.4'-Methylenedianiline

Preferably, the wastewater comprises 4,4'-Methylenedianiline in an amount of at least 0.25 mg/l, more preferably in an amount of at least 0.5 mg/l, and most preferably in an amount of at least 1 mg/l. Further, it is envisaged that it comprises 4,4'-Methylenedianiline in an amount of at least 3 mg/l.

Also preferably, the wastewater comprises 4,4'-Methylenedianiline in an amount of 0.25 to 30 mg/l, more preferably, in an amount of 1 to 10 mg/l, and most preferably in an amount of 2 to 7 mg/l. Further, it is envisaged that it comprises 4,4'-Methylenedianiline in an amount of 0.5 to 20 mg/l.

Phenol

Preferably, the wastewater comprises phenol in an amount of at least 1 mg/l, more preferably in an amount of at least 5 mg/l, and most preferably in an amount of at least 10 mg/l. Further, it is envisaged that it comprises phenol in an amount of at least 20 mg/l.

Also preferably, the wastewater comprises phenol in an amount of 1 to 500 mg/l, more preferably, in an amount of 5 to 100 mg/l, and most preferably in an amount of 5 to 50 mg/l. Further, it is envisaged that it comprises phenol in an amount of 5 to 20 mg/l.

TOC content

Preferably, the wastewater has a total organic carbon ("TOC") content of more than 50 mg/l, more preferably of more than 60 mg/l, even more preferably of more than 60 mg/l, and most preferably of more than 65 mg/l. Further, it is envisaged that wastewater has a TOC (total organic carbon) content of more than 70 mg/l, in particular of more than 100 mg/l.

In accordance with the method of the present invention, it is envisaged that total organic content of the wastewater to be treated does not exceed certain levels. The addition of a substrate as referred is particularly advantageous for wastewaters with a relatively low total organic content. Preferably, the TOC of the wastewater is lower than 1000 mg/l, more preferably lower than 600 mg/l, even more preferably lower than 400 mg/l, and most preferably lower than 200 mg/l.

In a preferred embodiment, the TOC of the wastewater to be treated is in the range from 50 mg/l to 400 mg/l. In another preferred embodiment, the TOC of the wastewater to be treated is in the range from 50 mg/l to 250 mg/l. In another preferred embodiment, the TOC of the wastewater to be treated is in the range from 50 mg/l to 200 mg/l.
Preferably, the above TOC value are the values in the feed flow.

The amount of the organic contaminations shall be reduced by the method of the present invention. The term "reducing" as used herein refers to a significant reduction of the amount, in particular of the total amount, of the at least organic compound of the hypersaline wastewater. Preferably, the term denotes a reduction of at least 30%, at least 50%, at least 70% or in particular of at least 90% or of at least 95% of the total amount of the at least one organic compound present in the wastewater, i.e. the untreated wastewater. Accordingly, the total amount of the at least one organic compound as referred to herein shall be reduced by at least 30%, at least 50%, at least 70% or in particular by at least 90% or by at least 95%. In an embodiment, the reduction is calculated by comparing the amount of the organic compounds in the treated wastewater to the amount in the untreated wastewater. The treated wastewater is, preferably, the wastewater which is removed from the continuous process, i.e. the effluent (also referred to as harvest).

The amount of the organic compounds is reduced by the presence, and thus, by the activity of the halophilic microorganism (which is described herein below in more detail). Thus, said amount shall be reduced by degradation of the compound by said cells. A reduction of the amount of the organic compounds by dilution of the wastewater is not considered as a reduction of the amount of said organic compounds.

In step b) of the method of the present invention, the wastewater shall be contacted with a halophilic microorganism, i.e. with cells of a halophilic microorganism. A halophilic microorganism as referred to herein in accordance with the method of the present invention is, preferably, a bacterium or archaeon which requires the presence of salt, in particular of sodium chloride, for its growth. In an embodiment of the method of the present invention, the halophilic microorganism is a moderately halophilic microorganism. In another embodiment of the method of the present invention, the halophilic microorganism is a extremely halophilic microorganism. A moderately halophilic microorganism preferably

requires at least 5% w/v NaCl for growth. An extremely halophilic microorganism preferably requires at least 10% w/v NaCl for growth.

The halophilic microorganism is preferably a halophilic bacterium or a halophilic archaeon (archaebacterium).

In a preferred embodiment of the method of the present invention, the halophilic microorganism belongs to the family of the Halobacteriaceae. Halobacteriaceae are a family of the Halobacteriales in the domain Archaea. Halobacteriaceae are found in water saturated or nearly saturated with salt.

In a more preferred embodiment of the method of the present invention, the halophilic microorganism belongs to the genus Haloferax.

In an even more preferred embodiment, the halophilic microorganism is selected from Halobacterium salinarum, Haloferax volcanii, Haloferax alexandrines, Haloferax chudinovii, Haloferax denitrificans, Haloferax elongans, Haloferax gibbonsii, Haloferax larsenii, Haloferax lucentense, Haloferax mediterranei, Haloferax mucosum, Haloferax prahovense and Haloferax sulfurifontis.

In a most preferred embodiment, the halophilic microorganism is Haloferax mediterranei. Thus the cells to be used in accordance with the present invention are, preferably, *Haloferax mediterranei* cells. Preferably, said cells are cells from the strain *Haloferax mediterranei* which has been deposited in the DSM (Deutsche Sammlung von Mikroorganismen und Zellkulturen, Braunschweig, Germany) under DSM number 1411. Thus, it contemplated that cells from the strain *Haloferax mediterranei* DSM 1411 are used (abbreviated herein HFX). The strain has been described by Rodriguez-Valera, F., Juez, G., Kushner, D. J. (1983). Halobacterium mediterranei sp. nov., a new carbohydrate-utilizing extreme halophile. Syst.Appl.Microbiol. 4 : 369-381. The document is herewith incorporated by reference in its entirety. How to culture this strain is well known in the art. For example, suitably culture conditions can be e.g. assessed from the DSMZ database for this strain. A suitable media composition for this strain is described in Example 1 of the Examples section.

In another embodiment of the method of the present invention, the halophilic microorganism belongs to the genus Halomonas (see e.g., Le Borgne, D. Paniagua, R. Vazquez-Duhalt, Biodegradation of Organic Pollutants by Halophilic Bacteria and Archaea, Journal of Molecular Microbiology and Biotechnology). Preferably, the halophilic microorganism belonging to the genus Halomonas is Halomonas organivorans, or Halomonas halophila.

In accordance with the method of the present invention, the halophilic microorganism, i.e. the cells of the halophilic microorganism, shall be present in the bioreactor. Accordingly, the wastewater is preferably contacted with the halophilic microorganism by continuously introducing the wastewater provided in step a) into the bioreactor which comprises the halophilic microorganism, i.e. cells of the halophilic microorganism. The wastewater is preferably added to the bioreactor via an inlet. Accordingly, the bioreactor shall comprise at least one inlet for the wastewater.

In step c) of the method of the present invention, the amount of the organic compounds comprised by the wastewater is reduced by the halophilic microorganism (i.e. cells of the halophilic microorganism) in the presence of at least one substrate which allows for the growth of said halophilic microorganism.

Said substrate has been added to the wastewater. Accordingly, it is envisaged that the substrate is not present or is essentially not present in the wastewater provided in step a) of the method of the present invention. Consequently, step b) may comprise the step of contacting the wastewater with at least one substrate and the halophilic microorganism. It is to be understood that certain contaminants present in the wastewater can be used by the microorganism as substrate. Thus, the added substrate might be an additional substrate.

Continuous bioprocessing of the wastewater has certain advantages compared to a batch-wise processing. It decreases costs because there are no down times for emptying, cleaning, refilling of the fermenter. Furthermore there is no need for storage tanks as the wastewater is treated immediately.

In addition to that continuous biological processes are relatively easy to control in comparison to the dynamic changes in batch or fed-batch mode. Once in steady state the process parameters stay constant. Position of that equilibrium depends on biological and process parameters. In the process presented here the steady state of the residual TOC depends on biomass concentration and residence time of wastewater in the fermenter. Those parameters are directly influenced by the 3 following process parameters: concentration of substrate, recirculation rate and dilution rate. As shown in the Examples section, the growth rate of the halophilic cells and the biomass concentration x can be controlled independently by altering the parameters. The whole process can thus be controlled by changing those parameters. In particular, the method of the present invention uses the controllability of biomass concentration by dilution rate and retention rate and extends the approach by the defined addition of a substrate to the feed. Controlling biomass concentration and dilution rate influence both quality and quantity of the treated wastewater. Hence, depending on the degree of contamination the parameters (i) concentration of co-substrate, (ii) recirculation rate and (iii) dilution rate are varied to achieve high quality water at maximum productivity. The invention enables a stable, controllable continuous process for reducing the amount of organic compounds in wastewater.

In an embodiment of the method of the present invention, the substrate has been added to (i.e. contacted with) the wastewater prior to introducing the wastewater into the bioreactor, thereby generating a composition comprising the wastewater and the substrate. Thereafter, the generated composition is introduced into the bioreactor. Thus, the substrate

and the wastewater are introduced into the bioreactor via the same inlet.

In an alternative embodiment of the method of the present invention, the substrate has been added to the wastewater after introducing the wastewater into the bioreactor. Thus, the substrate and the wastewater are introduced into the bioreactor via separate inlets. In this embodiment, the bioreactor comprises at least one inlet for the wastewater and at least one inlet for the substrate.

The term "substrate" as used herein preferably refers to any compound that allows for the growth of the halophilic microorganism. Thus, the substrate is a carbon source which allows for the growth of the halophilic microorganism. Whether a substrate allows for the growth of the microorganism can be determined by the skilled person without further ado. Preferably, said substrate is a carbohydrate, more preferably said substrate is glycerol, an organic acid, or a sugar (such as a hexose, a pentose, maltose, glucose, fructose, sucrose, a monosaccharide, a disaccharide, or an oligosaccharide), more preferably the substrate is selected from glycerol, acetate, glucose, sucrose, lactate, malate, succinate, and citrate. In a particularly preferred embodiment, the substrate is glycerol.

Furthermore, the substrate may be a polysaccharide such as starch or chitin.

Preferably, the substrate is added to the wastewater in form of a solution comprising the substrate. After adding substrate to the wastewater, the wastewater shall comprise the substrate predefined concentration. Suitable concentrations for the substrate can be determined by the skilled person. As described in the example 4, the concentration of the substrate depends on the desired dilution rate and/or the desired recirculation rate. Preferably, the concentration of the substrate is calculated by applying equations 1 to 3 given in the Examples section.

Preferably, a constant amount of the substrate is added to the bioreactor per each liter of the wastewater introduced into the bioreactor. Preferably, the constant amount is an amount at least 0.1 gram of the substrate (such as glycerol), more preferably, it is an amount which is in the range of 0.1 gram to 5 gram, in particular of 0.1 gram to 3 gram of the substrate (such as glycerol).. Of course, the concentration of the substrate in the bioreactor will be lower as compared to the concentration in the introduced wastewater, because the substrate is metabolized by the cells comprised by the bioreactor. The substrate is thus required for formation of new biomass. Preferably, the substrate will be completely used by the halophilic microorganism. Accordingly, the continuous process is preferably carried out under carbon-limiting conditions.

It is envisaged that further nutrients and trace element which are required for the growth of the halophilic microorganism are added to the wastewater (either before or after introducing of the wastewater into the bioreactor). Preferably, at least one phosphorus source, at least one nitrogen source, at least one sulfur source, at least one potassium source and at least one magnesium source are added as nutrients to the wastewater. It is to be understood that the nutrients are added to the wastewater in a form which is available to the bacterium. For example, nutrients can be added as $NH_4Cl$, $KH_2PO_4$, $Na_2SO_4$, $MgCl_2$ (e.g. $MgCl_2$ * 6 $H_2O$), $FeCl_3$, $MgSO_4$, $CaCl_2$ (e.g. $CaCl_2$ * 2 $H_2O$), KBr and KCl. Further, trace elements such as iron, copper, zinc, manganese and cobalt are preferably added to the wastewater.

The selection of suitable nutrients and trace elements can be carried out by the skilled person. Suitable concentrations of the nutrients and trace elements are described in the literature (see e.g. Lorantfy et al.).

For example, the following concentration ranges and concentrations are considered as suitable.

Concentration in the wastewater:

- $NH_4Cl$: 0.5 to 3 g/l, e.g. 1.5 g/l
- $KH_2PO_4$: 0.05 to 0.5 g/l, e.g. 0.15 g/l
- $MgCl_2$ * 6 $H_2O$: 0.5 to 3 g/l, e.g. 1.3 g/l
- $CaCl_2$ * 2 $H_2O$: 0.1 to 2 g/l, e.g. 0.55 g/l
- KCl: 0.5 to 3 g/l, e.g. 1.66 g/l
- $MgSO_4.7H_2O$: 0.5 to 3 g/l, e.g. 1.15g/l
- $FeCl_3$: 0.001 to 0.1 g/l, e.g. 0.005 g/l
- KBr: 0.1 to 2 g/l, e.g. 0.5 g/l
- $MnCl_2.4H_2O$: 0.001 to 0.1 g/l, e.g. 0.003 g/l

Further preferred concentrations for the nutrients are specified in Table 1 of the Examples section.

The reduction of the organic compounds in step c) of the method of the present invention is carried out as a continuous process in a bioreactor. The term "bioreactor" is well known in the art and preferably refers to a system in which conditions are closely controlled to permit the reduction of the content of the at least one pollutant as referred to herein. In an embodiment, said bioreactor is a stirred tank reactor. In a further embodiment, the bioreactor is airlift reactor. In an even further embodiment, the bioreactor is a bubble column reactor.

Preferably, the bioreactor is made of a non-corrosive material such as stainless steel, Borosilicate glass, or plastic (e.g. polysulfone (PSU), polyetheretherketone (PEEK), polytetrafluoroethylene (PTFE) and polyvinylidene fluoride (PVDF)). The bioreactor can be of any size as long as it is useful for the incubation of the wastewater. Preferably, the bioreactor allows for a large scale reduction of the amount of the organic compounds. Therefore, it is envisaged that the

bioreactor has a volume of at least 1, 10, 100, 500, 1000, 2500, or 5000 liters or any intermediate volume.

Further, it is envisaged to carry out the reduction in an industrial scale. Accordingly, the bioreactor may have a volume of at least 10000, or, in particular, of at least 100000 liters.

However, it is also envisaged to carry out the method of the present invention at a low scale, such as with a volume of 5 to 100 ml, or 5 ml to 1 liter.

The reduction of the amount of organic components comprised by the wastewater is carried out as a continuous process. Preferably, the continuous process is carried over at period of at least one week, more preferably, over period of at least one month, even more preferably over a period of at least three months, and most preferably over a period of at least six months.

The term "continuous process" also referred to as "continuous culture" is characterized by both a continuous inflow of the feed (wastewater, substrate and further nutrients) and a continuous outflow of the effluent (the treated wastewater). Preferably, the inflow has essentially the same volume as the outflow.

Accordingly, the bioreactor is preferably a chemostat. A chemostat in accordance with the present invention is a bioreactor into which the wastewater provided in step a) of the method of the present invention is continuously introduced, while treated wastewater is continuously removed at the same rate to keep the culture volume constant. Thus the inflow (the feed, i.e. the wastewater) has the same volume as the outflow (the effluent, i.e. the treated wastewater). By changing the rate by which the substrate is added to the bioreactor, the specific growth rate of the microorganism can be controlled.

Treated wastewater shall be continuously removed from the continuous process. Preferably, the bioreactor has at least one outlet for the outflow, i.e. for the treated wastewater. Preferably, the outflow is free or substantially free of cells of the halophilic microorganism. Thus, the outflow shall have a lower cell concentration, in particular a substantially lower cell concentration than that in the bioreactor. This is achieved by separating the cells of the halophilic microorganism from at least a portion of the wastewater which is removed from the continuous process.

In a preferred embodiment, the method of the present invention thus comprises the step of separating the cells of the halophilic microorganism from the wastewater, thereby giving the treated wastewater, i.e. the outflow.

The separation of cells from the wastewater can be achieved by methods well known in the art. In an embodiment, the cells are separated from the wastewater by centrifugation. In a further embodiment, the cells are separated from the wastewater by decanting. In an even further embodiment, the cells are separated from the wastewater by sedimentation.

In a particularly preferred embodiment, the cells are separated from the treated wastewater by filtration. The term "filtration" refers to the use of a filter to separate the cells of the halophilic microorganism from the wastewater. Preferably, the filtration is membrane filtration.

More preferably, the filtration is hollow fibre membrane filtration. Hollow fibre membranes are a class of artificial membranes containing a semi-permeable barrier in the form of a hollow fibre. Preferably, the hollow fibre membrane is a polysulfone (PSU) hollow fibre membrane.

The pore size of the membrane to be used for filtration, in particular of the hollow fiber membrane preferably shall allow for separating the cells from the treated wastewater. In an embodiment, the pore size is about 0.2 $\mu$m.

In an embodiment of the present invention, the membrane used for filtration is provided in form of a filter cassette.

Thus, the bioreactor to be used in accordance with the method of the present invention is connected with a cell separation device, i.e. a device allowing the separation of the cells from the wastewater. In particular, said device shall continuously separate the cells of the halophilic microorganism to obtain a filtrate, i.e. clear filtrate, of the treated wastewater. The filtrate might be further subjected to a concentration step and/or an electrolysis step as described elsewhere herein.

In an embodiment, the cell separation device is a centrifugation device (a centrifuge), a decanting device (a decanter), a sedimentation device, or a filtration device, i.e. such as a filter, preferably a membrane filter as specified above. In an embodiment, the filtration device is comprised by a container (in particular a tank) which is connected to the bioreactor.

In a preferred embodiment of the method of the present invention, at least a portion of the separated cells, i.e. the cells that were separated from the wastewater (herein also referred to as first portion of the treated wastewater), is fed back into the bioreactor. Thus, the separated cells are reintroduced into the bioreactor (and are thus retained in the system). Thus, the cell separation device preferably allows for retaining at least a portion of the cells comprised by the harvest stream in the system. The portion of cells that is reintroduced (i.e. retained) can be specified by the rate of reintroduction (reintroduction rate) which is frequently also referred to as recirculation rate. The reintroduction rate or recirculation rate is defined as the ratio of the harvest flow to the feed flow (see equation 2 in the Examples section).

Accordingly, the recirculation rate can be calculated as follows:

$$R = \frac{Harvestflow}{Feedflow}$$

The reintroduction of a portion is preferably achieved by a cell retention device. Thus, the system of the present invention preferably comprises a cell retention device which is connected by the bioreactor. Preferably, the cell retention device comprises a filter as described herein elsewhere. Said device shall allow for separating cells of the microorganism from the treated wastewater, thereby generating cell-free harvest stream and reintroducing the separated cells into the reactor. Thereby, a high density of cells of the halophilic microorganism is obtained in the bioreactor.

In a preferred embodiment, the continuous process as referred to herein is carried out at a constant recirculation rate. Said constant recirculation rate is preferably a predetermined recirculation rate. As described elsewhere herein, the recirculation rate depends on the concentration of the substrate and the dilution rate. It is to be understood that the recirculation rate is lower than 1. Preferably, the recirculation rate is at least 0.8, more preferably at least 0.9, more preferably in the range of 0.8 to 0.99, even more preferably in the range of 0.9 to 0.99, and most preferably in the range of 0.9 to 0.95. Thus, the continuous process in step c) of the method of the present invention is preferably carried out at one of the aforementioned recirculation rates.

In accordance with the method of the present invention, not all cells of the treated wastewater which is removed from the continuous process are reintroduced into the bioreactor. Rather, it is envisaged that the cells of a second portion of the treated wastewater are removed from the continuous process (bleed flow). The second portion of the wastewater can be removed from the process without separating the cells from the wastewater. By adapting the dilution rate, the recirculation rate and the concentration of the substrate, it is ensured that the removed cells are continuously replaced by newly grown cells. The bleed stream is required for removal of newly formed biomass. Preferably, the amount of the substrate is reduced by the halophilic microorganism simultaneously with the reduction of the amount of organic compounds. Thus, the TOC content of the treated wastewater is not increased by the addition of the substrate is the process is C-limited.

By reintroducing the separated cells into the bioreactor, i.e. by cell retention, a high cell density culture is achieved. This is advantageous as it allows for an improved reduction of the amount of the organic compounds in the wastewater (see Examples). Accordingly, the wastewater, i.e. the culture in bioreactor shall have a high concentration of biomass.

A high concentration of biomass as referred to herein, is preferably a concentration of at least 5 g/l, more preferably, of at least 10 g/l, even more preferably of at least 20 g/l, and most preferably of at least 30 g/l. Further, it is envisaged that the biomass is at least 50 g/l. The term "biomass" as used herein means dry biomass. Thus, the term refers to dry mass of the cells, in particular of the cells of the halophilic microorganism. It is to be understood that the biomass concentrations given herein are based on the working volume of the bioreactor. Only the liquid volume is taken into account.

In a preferred embodiment of the method of the present invention, the biomass concentration is 10 g/l to 50 g/l. In another preferred embodiment, the biomass concentration is 20 g/l to 40 g/l.

The bioreactor to be used in accordance with the present invention, preferably, further comprises a loop pump. Said loop pump shall allow for transferring the composition comprising the cells to the cell separation means (e.g. the container comprising a filter as specified above), and for the reintroduction of the separated cells, i.e. the first portion of cells, into the bioreactor.

After introducing the wastewater and the substrate (and further nutrients and trace elements as described elsewhere herein) into the bioreactor, the resulting composition is incubated in order to allow for the reduction of organic compounds by the cells of the halophilic microorganism.

The continuous process as referred to herein is carried out at a variable dilution rate. Said constant recirculation rate is preferably a predetermined dilution rate. The term "dilution rate" refers to the ratio of the volume of the wastewater introduced into the bioreactor (i.e. the volume of the feed) per hour to the volume of culture in the bioreactor (unit: $h^{-1}$). Also, the dilution rate is the reciprocal of the hydraulic retention time (HRT) which is the average length of time that the wastewater remains in the bioreactor.

The continuous process according to the present invention can be carried at relatively high dilution rates of which makes the process more useful for larger industrial processes.

The continuous process of the present invention is preferably controlled by the following parameters (i) concentration of the at least one substrate (i.e. the amount of substrate added to the wastewater), (ii) recirculation rate R and (iii) dilution rate D.

Preferably, the continuous process as referred to herein is carried at a dilution rate D which equal to or larger than 0.05 $h^{-1}$. Accordingly, the average length of time that the wastewater remains in the bioreactor is equal to or less than 20 hours.

In particular, the continuous process is carried at a dilution rate which is is equal to or larger than 0.1 $h^{-1}$. Accordingly, the average length of time that the wastewater remains in the bioreactor is equal to or less than 10 hours.

Further, it is envisaged that the continuous process is carried out at a dilution rate which is in the range from 0.05 to 0.4 $h^{-1}$ , in particular in the range from 0.1 to 0.4 $h^{-1}$. Accordingly, the average length of time that the wastewater remains in the bioreactor from 2.5 to 20 hours, or from 2.5 to 10 hours.

Further, it is envisaged that the continuous process is carried out at a growth rate μ of the halophilic microorganism which is larger than 0.008 $h^{-1}$, in particular which is larger than 0.015 $h^{-1}$. The term "growth rate" refers to the specific growth rate. It is quantitative measure of cell mass increase per unit of time. The dimension of the specific growth rate is reciprocal time, usually expressed as reciprocal hours, or $h\text{-}1^1$. The growth rate μ is calculated according to Equation 5 provided in the Examples section.

In an embodiment of the present invention, the growth rate is larger than 0.015 $h^{-1}$ but lower than 0.03 $h^{-1}$, in particular larger than 0.015 $h^{-1}$ but lower than 0.025 $h^{-1}$

Preferably, the continuous process is carried out under conditions which allow for the reduction. Preferred concentrations of the substrate, the further nutrients and the trace elements can be determined by the skilled person. Further, the process shall be carried out at a suitable temperature and suitable pH value:

Preferably, the continuous process and thus the reduction of the organic components is carried out at a pH value in the range of 6.0 to 8.2, more preferably in the range of 6.2 to 7.6, most preferably in the range of 6.8 to 7.4. The optimal pH value is 7.0.

Moreover, it is envisaged that continuous process and thus the reduction of the organic components is carried out at a temperature of 18°C to 55°C, more preferably at a temperature of 25°C to 45°C, even more preferably at a temperature of 30°C to 40°C, most preferably at a temperature of 35°C to 40°C. The optimal temperature is 37°C.

In a preferred embodiment, the pH value and/or the temperature of the composition comprised by the bioreactor is monitored during the continuous process. Thus, the bioreactor further comprises a device for measuring the pH-value (such as a pH-meter),a device for measuring the temperature (such as a thermometer) of the composition comprised by bioreactor, a dissolved oxygen sensor, and/or an on-line TOC analyzer. It is envisaged that the pH value of the composition is kept constant during the continuous process. This can be e.g. achieved by adding HCl or NaOH. Further, it is envisaged that the temperature of the composition is kept constant during the continuous process.

Preferably, the temperature and the pH value are controlled by proportional-integral-derivative controller (PID controller). A PID controller is a control loop feedback mechanism (controller) commonly used in industrial control systems. A PID controller continuously calculates an error value the difference between a desired setpoint and a measured process variable and applies a correction based on proportional, integral, and derivative terms. Thus, the bioreactor to be used further comprises one PID controller for the temperature and one PID controller for the pH value.

In a preferred embodiment of the method of the present invention, the composition comprised by the wastewater is agitated, in particular stirred, during the continuous process.

The continuous process is carried out under aerobic conditions. Preferably, aerobic conditions are maintained by introducing air or purified oxygen to the bioreactor, i.e. to the composition comprised by the bioreactor continuously. Accordingly, the bioreactor further comprises an inlet for air or purified oxygen.

As set forth above, the amount(s) of the organic compounds (such as formate, aniline, nitrobenzene, 4,4'-Methylenedianiline, or phenol as specified elsewhere herein) or the amount of the total organic carbon in the treated wastewater shall be reduced as compared to the amount in the untreated wastewater. Preferably, the amount is reduced by at least 30%, at least 50%, at least 70% or in particular by at least 90% by of at least 95%.

The treated wastewater, preferably comprises aniline in an amount of less than 5 mg/l. More preferably, it comprises aniline in an amount of less than 1 mg/l and most preferably less than 0.2 mg/l.

Preferably, the treated wastewater comprises formate in an amount of less than 15 mg/l, more preferably less of than 10 mg/l and most preferably less than 5 mg/l after the method of the present invention has been carried out.

Preferably, the treated wastewater comprises nitrobenzene in an amount of less than 15 mg/l, more preferably of less than 10 mg/l and most preferably of less than 5 mg/l after the method of the present invention has been carried out.

Also preferably, the treated wastewater comprises 4,4'-Methylenedianiline in an amount of less than 15 mg/l, more preferably of less than 10 mg/l and most preferably of less than 5 mg/l after the method of the present invention has been carried out.

Preferably, the treated wastewater comprises phenol in an amount of less than 15 mg/l, more preferably of less than 10 mg/l and most preferably of less than 5 mg/l after the method of the present invention has been carried out.

Preferably, the treated wastewater has a TOC content of less than 40 mg/l, more preferably of less than 30 mg/l and most preferably of less than 20 mg/l.

The treated wastewater, i.e. the outflow, may be subjected to further steps (in particular after separation of the cells). In a preferred embodiment of the present invention, the method further comprises the step of concentrating the treated wastewater. This step will increase the NaCl concentration of the treated wastewater, i.e. the NaCl is up-concentrated in the treated wastewater. Preferably, the concentrated treated wastewater comprises NaCl in a concentration of more than 20.0% (w/v), based on the total volume of the wastewater, in particular in a concentration of more than 22% (w/v). These NaCl concentrations are ideal concentrations when used in the feed stream of the chloralkali process (which is preferably carried out with the treated wastewater or concentrated treated wastewater obtained by carrying

out the method of the present invention, see herein below).

In accordance with the present invention, the up-concentration of NaCl in the treated wastewater can be achieved by any method deemed appropriate. Preferred methods are reverse osmosis, ultrafiltration and nanofiltration. In these methods, a positive osmotic pressure to one side of a filtration membrane. Further, the up-concentration can be achieved by evaporization. As set forth above, the wastewater may comprise NaCl in a concentration of more than 20% (w/v). If these concentrations are used, the concentration step, in principle, could be omitted when subjecting the treated wastewater to the chloralkali process (as described herein below).

Further, the treated wastewater and/or the concentrated treated wastewater can be subjected to further purification steps. In an embodiment of the method of the present invention, the method further comprises the removal of inorganic components from said composition. Said inorganic components are preferably trace elements and/or salts of the media components. The further purification steps shall be carried our prior to subjecting the treated wastewater and/or the concentrated treated wastewater to sodium chloride electrolysis.

As said forth above, the method of the preferably invention further comprises subjecting the treated wastewater to sodium chloride electrolysis, thereby producing chlorine and sodium hydroxide and optionally hydrogen. According, the present invention also envisages a method for producing chlorine and sodium hydroxide and optionally hydrogen.

The electrolysis of sodium chloride can be carried out by methods well known in the art. Membrane electrolysis processes are usually used, for example, for the electrolysis of solutions containing sodium chloride (on this subject, see Peter Schmittinger, CHLORINE, Wiley-VCH Verlag, 2000). Here, an electrolysis cell which is divided in two and comprises an anode space with an anode and a cathode space with a cathode is used, Anode space and cathode space are separated by an ion-exchange membrane. A solution containing sodium chloride and having a sodium chloride concentration of usually more than 300 g/l is introduced into the anode space. At the anode, the chloride ion is oxidized to chlorine which is discharged from the cell with the depleted sodium chloride solution (about 200 g/1). The sodium ions migrate under the action of the electric field through the ion-exchange membrane into the cathode space. During this migration, each mol of sodium carries with it from 3.5 to 4.5 mol of water, depending on the membrane. This leads to the anolyte becoming depleted in water. In contrast to the anolyte, water is consumed on the cathode side by the electrolysis of water to form hydroxide ions and hydrogen. The water carried with the sodium ions into the catholyte is sufficient to keep the sodium hydroxide concentration in the output at 31-32% by weight, at an inlet concentration of 30% and a current density of 4 $kA/m^2$. In the cathode space, water is electrochemically reduced to form hydroxide ions and hydrogen.

As an alternative, a gas diffusion electrode at which oxygen is reacted with electrons to form hydroxide ions and no hydrogen is formed can be used as cathode. The hydroxide ions together with the sodium ions which have migrated into the cathode space via the ion-exchange membrane form sodium hydroxide. A sodium hydroxide solution having a concentration of 30% by weight is usually fed into the cathode chamber and a sodium hydroxide solution having a concentration of 31-32% by weight is discharged. The aim is to achieve a very high concentration of sodium hydroxide since the sodium hydroxide is usually stored or transported as a 50% strength solution. However, commercial membranes are at present not resistant to an alkali solution having a concentration greater than 32% by weight, so that the sodium hydroxide solution has to be concentrated by thermal evaporation.

In the case of the electrolysis of sodium chloride, additional water is introduced into the anolyte via this solution containing sodium chloride, but water is only discharged into the catholyte via the membrane. If more water is introduced via the solution containing sodium chloride than can be transported to the catholyte, the anolyte becomes depleted in sodium chloride and the electrolysis cannot be operated continuously. In the case of very low sodium chloride concentrations, the secondary reaction of oxygen formation would occur.

In a preferred embodiment of the method of the present invention, the sodium chloride electrolysis is selected from membrane cell electrolysis of sodium chloride, in particular membrane electrolysis using oxygen consuming electrodes and diaphragm cell electrolysis of sodium chloride.

Preferably, the bioreactor as set forth herein is connected, i.e. operably linked, to a sodium chloride electrolysis device, i.e. a device which allows for carrying out the sodium chloride electrolysis e.g. membrane cell electrolysis. Preferably, the bioreactor is connected to the sodium chloride electrolysis device via the cell retention device (which shall allow for continuously separating the cells from the wastewater to obtain a filtrate of treated wastewater, i.e. a clear filtrate).

Preferably, the sodium chloride electrolysis device is fed with the treated wastewater or the concentrated treated wastewater obtained by the method of the present invention, thereby allowing the continuous production of chlorine and sodium hydroxide and optionally hydrogen.

The definitions and explanations given herein above in connection with the method of the present invention apply *mutatis mutandis* to the bioreactor and system of the present invention.

The present invention also relates to a bioreactor comprising a hypersaline wastewater and at least one substrate which allows for the growth of cells of Haloferax mediterranei, wherein the biomass concentration of the cells of Haloferax mediterranei in the wastewater is a least 10 g/l.

Further, the present invention relates to a system comprising a bioreactor comprising a hypersaline wastewater and cells of at least one halophilic microorganism, said bioreactor being connected to a cell retention device which allows for continuously separating the cells from the wastewater to obtain a filtrate of treated wastewater, wherein said cell retention device is connected to a device allowing for sodium chloride electrolysis (i.e. for sodium chloride electrolysis of the filtrate of the treated wastewater). Preferably, the halophilic microorganism is Haloferax mediterranei.

The bioreactor of the present invention (or of system of the present invention) may have any volume as set for above. Preferably, the bioreactor comprises least 1, 10, 100, 500, 1000, 2500, or 5000 liters of hypersaline wastewater. In an embodiment, the bioreactor comprises at least 1000 liters of hypersaline wastewater In particular, it is envisaged that the bioreactor allows for reducing the amounts of organic compounds in an industrial scale. Accordingly, the bioreactor may comprise least 10000, or, in particular, at least 100000 liters of hypersaline wastewater.

The hypersaline wastewater of the bioreactor of the present invention (or of the system of the present invention) shall comprise a substrate. The substrate is defined above. Preferably, the substrate has been added to the hypersaline wastewater as described herein above in connection with the method of the present invention.

The biomass concentration of the cells of Haloferax mediterranei in the wastewater comprised by the bioreactor is at least 10 g/l (i.e. 10 g biomass per liter hypersaline wastewater/culture), more preferably the biomass concentration in the wastewater is at least 20 g/l, even more preferably, the biomass concentration is 10 g/l to 50 g/l, and most preferably the biomass concentration is 20 g/l to 40 g/l. Preferably, the same applies to the bioreactor comprised by the system of the present invention.

In an embodiment of the bioreactor of the present invention, the bioreactor is operably linked to a cell retention device which allows for continuously separating the cells from the wastewater to obtain a filtrate of treated wastewater. Further, it is envisaged that the bioreactor is connected to a device allowing for sodium chloride electrolysis (as described elsewhere herein). Preferably, the bioreactor is connected to a device allowing for sodium chloride electrolysis of the treated wastewater to produce at least chlorine and sodium hydroxide. The new system enables the continuous biological purification of hypersaline wastewater and the production of chlorine and NaOH, which products may be used for generally known chemical processes as described in detail above.

In the figures:

Figure 1 Process scheme. Saline wastewater (1) is supplemented with media components. Second substrate is added (2) to guarantee stability of the continuous process. A constant bleed stream (3) is taken to ensure constant biomass concentration in steady state. Treated cell free harvest (4) shows low residual TOC concentrations compared to original feed. The corrosion resistant bioreactor (6) is equipped with a pump that ensures constant loop flow (5), so that harvest can be separated continuously using membrane module (7).

Figure 2 Influence of dilution rate and biomass concentration on the quality of the harvest. Both factors have a linear influence on residual TOC.

Figure 3 TOC reduction by extreme halophilic cells in continuous process in %. Feed represents saline wastewater. Harvest 1-4 represent biologically treated samples after processing without Co-feeding (Phase 1 and 3) and with Co-feeding.

Figure 4 Control concept of the process. The Biomass concentration and the specific growth rate $\mu$ can be changed by altering the parameters dilution rate D, Recirculation Rate R and substrate in Feed $S_{in.}$

All references cited in this specification are herewith incorporated by reference with respect to their entire disclosure content and the disclosure content specifically mentioned in this specification.

The invention will be merely illustrated by the following Examples. The said Examples shall, whatsoever, not be construed in a manner limiting the scope of the invention.

Exemplary embodiments

**Example 1: continuous processing with high productivity**

Cultivation was established in a bioreactor to show feasibility of TOC reduction in brines containing very low amounts of organic carbon. It should be investigated how process parameters influence the quality of the harvest. The developed process uses continuous cultivation process and cell retention. HFX cells were cultivated in brine containing 15 % w/v NaCl. Process parameters pH, stirrer speed, dilution rate and reactor temperature were controlled. The process is run continuously using a cell retention system with a polysulfone (PSU) hollow fibre membrane. It has an area of 420 $cm^2$ and a pore size of 0.2 $\mu$m.

The special non-corrosive Labfors PEEK (Infors, AG, Switzerland) reactor was utilized with the following specifications:

1 L Borosilicate glass culture vessel with cooling/heating jacket
Borosilicate glass exhaust gas cooling
Special corrosion resistant Polymer (PEEK) bioreactor top lid
Special corrosion resistant Polymer (PEEK) thermometer holder
Borosilicate glass sampling tube and gas inlet tube
Special corrosion resistant agitator
Loop pump constantly circulating cell suspension out of vessel and back into vessel Hollow fibre membrane module attached to loop
Bleed pump attached to loop
Harvest pump attached to membrane module
Feed pump

Online Analytics of:

Exhaust gas $CO_2$
Exhaust gas $O_2$
Glass pH probe
$pO_2$ probe and
Thermal Mass flow controller for incoming air

The following media components were added to the brine: KCl 1.66 g/l, $NH_4Cl$ 1.5 g/l, $KH_2PO_4$ 0.15 g/l, $MgCl_2.6H_2O$ 1.3 g/l, $MgSO_4$. $7H_2O$ 1.1 g/l, $FeCl_3$ 0.005 g/l, $CaCl_2.2H_2O$ 0.55 g/l, KBr 0.5 g/l, Mn stock 3ml and trace elements 1 ml. Trace elements containing Fe, Cu, Mn, Co, Zn. Amount of glycerol as co-substrate was calculated in a way that the resulting growth rate was constant for all experiments, independent from dilution rate.

Temperature: 37° C
pH: 7.0 (controlled using 0.5 M HCl and 0.5 M NaOH)

Using a multivariate design of experiments it was shown what influence the process parameters dilution rate and biomass concentration have on harvest quality. Dilution rate was varied in the range of 0.1 to 0.6 $h^{-1}$, Biomass concentration in the range of 2 to 5 g/L.

The results showed that TOC concentration in the wastewater was decreased from 84 ppm down to a range of 11-35 ppm. Both dilution rate and biomass concentration have a strong linear influence on the harvest quality. The higher the biomass in the fermenter, the lower is the residual TOC in the harvest. On the other hand the effect of dilution rate on TOC and harvest quality is negative. Lowest residual TOC was achieved using high biomass concentration and low dilution rate. The results also show us that high dilution rates can be compensated by higher biomass concentration.

The data gained in that experiment were used to calculate a linear regression model with biomass concentration and dilution rate as input. Model data were analysed using MODDE software. The model showed very good correlation ($R^2$ 0.97, $Q^2$ 0.82, Validity 0.35, Reproducibility 0.99). Depending on a predefined quality of the harvest and requested dilution rate of the process the biomass concentration can be read of the model. Process can be controlled by defined addition of co-substrate, recirculation rate and dilution rate.

**Example 2: stabilizing effect of co-substrate**

A stable process is characterized by a state that shows little if any change. Experiments should show if stable continuous cultivation is possible without use of a co-substrate.

The bioreactor system described in Example 1 was used for those experiments. The following media components were added to the brine: KCl 1.66 g/l, $NH_4Cl$ 1.5 g/l, $KH_2PO_4$ 0.15 g/l, $MgCl_2.6H_2O$ 1.3 g/l, $MgSO_4$. $7H_2O$ 1.1 g/l, $FeCl_3$ 0.005 g/l, $CaCl_2.2H_2O$ 0.55 g/l, KBr 0.5 g/l, Mn stock 3ml and trace elements 1 ml. Trace elements containing Fe, Cu, Mn, Co, Zn. In case of 'co-feeding' the medium was supplemented with 0.69 g/L Glycerol.

Temperature: 37° C
pH: 7.0 (controlled using 0.5 M HCl and 0.5 M NaOH)

The experiment was performed with a biomass concentration of 1.7 g/L *Haloferax mediterranei.* Cultivation

was done in continuous mode using a constant feed of 100 mL/h resulting in a dilution rate D=0.1 h-1. The bioreactor was set in total cell retention, which means the bleed is set to 0 mL/h.
Samples of the harvest were taken to investigate TOC and residual formate concentration. Concentration of glycerol and organic acids was determined using HPLC.

The experiment was performed in three phases: 1) without co-feeding (100 h), 2) with co-feeding (40 h), 3) without co-feeding (100 h).

Results showed that formate concentration in this experiment was reduced 70-88 % of the original concentration and TOC content was degraded 65-79 % by treatment with extreme halophilic *Haloferax mediterranei.* Co-feeding had a high influence on quality of the treated brine.

Both TOC and residual formate concentration increased over time when no second substrate was fed (Harvest 1 taken after 50 h, Harvest 2 taken after 100 h). It shows that the process is not stable without co-feeding, cells reduce in activity and harvest quality is constantly decreasing. Cells could not utilize organic components in brine for formation of biomass.

When cells were co-fed with glycerol quality of the harvest increased (Harvest 3). Cells formed fresh biomass and metabolized co-substrate and organic impurities simultaneously. When supply of co-substrate was stopped, quality of harvest decreased again (Harvest 4 taken 70 h after stop of co-feeding).

**Example 3: process control and start-up strategy**

It could be derived from example 1 that biomass concentration has a high influence on the formate degradation. Consequently the amount of biomass in the fermenter is proportional to the productivity of the process. Hence, controlling the biomass concentration means controlling the degradation process.

The cofeeding strategy that was developed for this process gives the unique possibility to control this high-throughput degradation. By adding a defined concentration of additional substrate (here glycerol) the amount of biomass in the steady state condition is defined.

The automated control strategy of the process is composed of two phases. In phase I (the start-up phase) the goal is to expand the cells to a target biomass concentration. The phase II (steady state phase) is the phase of the biological treatment.

The start-up phase is planned as batch, where substrate concentration is determined according to the target biomass concentration. Biomass concentration can then be estimated as following:

$$x = x_0 \cdot e^{\mu max \cdot (t - t_0)} \qquad \text{Equation 1}$$

where xo is the biomass concentration at start time to, $\mu_{max}$ is the maximum specific growth rate and x is the biomass concentration at time t. For growth of *HFX* on glycerol maximum specific growth rate was determined $\mu_{max}$ = 0.067 $h^{-1}$. Substrate consumption follows the correlation

$$\Delta s = Y_{x/s} \cdot \Delta x \qquad \text{Equation 2}$$

The yield $Y_{x/s}$ defines the amount of substrate needed to form a certain amount of biomass. For growth of HFX on glycerol it was determined $Y_{x/s}$ = 0.75 mol/mol under batch conditions.

When the target biomass concentration is reached, the process is switched to phase II (steady state phase). The process will get to steady state condition when the final biomass concentration is reached. In this phase a constant feed is added and cell-free harvest as well as the cell containing bleed are constantly removed from the reactor. The steady state condition is defined by the process parameters D (dilution rate [$h^{-1}$]), R (recirculation rate [ ]) and $s_{in}$ (Substrate concentration in the feed [g/L]) according to Equation 3, 4 and 5. The closer the biomass concentration in phase I is to target concentration, the shorter this adaptation phase will be.

$$x = \frac{Y_{X/Gly} \cdot s_{in\,Gly} + Y_{X/For} \cdot s_{in\,For}}{1 - R} \qquad \text{Equation 3}$$

$$R = \frac{Harvestflow}{Feedflow} \qquad \text{Equation 4}$$

$$\mu = (1 - R) \cdot D \qquad \text{Equation 5}$$

$Y_{x/Gly}$ and $Y_{x/For}$ are the yields that describe how much biomass x is formed per g Glycerol or Formate. We could determine $Y_{x/Gly}$=0.63 Cmol/Cmol and $Y_{x/For}$=0.44 Cmol/Cmol. Equation 3 was derived from equations that are available in literature and from findings that were made as results of our research.

The bioreactor setup described in example 1 was used for this experiment. The following components were used to prepare a synthetic medium: NaCl 150 g/L, KCl 1.66 g/l, $NH_4Cl$ 1.5 g/l, $KH_2PO_4$ 0.15 g/l, $MgCl_2.6H_2O$ 1.3 g/l, $MgSO_4$. $7H_2O$ 1.1 g/l, $FeCl_3$ 0.005 g/l, $CaCl_2.2H_2O$ 0.55 g/l, KBr 0.5 g/l, Mn stock 3ml and trace elements 1 ml. Trace elements containing Fe, Cu, Mn, Co, Zn.

Biomass was estimated using a softsensor. Detailed description can be found in the literature.

A combination of different R and $s_{in}$ were used to achieve defined biomass concentrations and growth rates. Dilution rate D was kept constant at 0.1 $h^{-1}$ for the whole process. Figure 4 shows that the biomass concentration could be controlled on different levels - steady state conditions could be reached. The specific growth rate $\mu$ and the biomass concentration x can be controlled independently by altering the parameters D, R and $s_{in}$.

The control concept uses the parameters (i) concentration of co-substrate, (ii) recirculation rate and (iii) dilution rate for control of quantity and quality of the treated waste water. However, due to interdependencies between the parameters (see Equation 4- -Equation 5), some of the requirements set for an optimized process are contradicting (see Table 1). It is desired to reduce the amount of substrate that is added to the feed for reduction of operational costs. This leads to a low biomass concentration unless retention rate R is high. High retention rate, however, results in low specific growth rates $\mu$ and thus a low degradation rate for formate. On the other hand a high retention rate is desired for the low amount of cell waste that is produced and that causes additional costs for disposal.

**Table 2** shows the application of the control concept for an example process. The basic process (case 1) is simulated at a dilution rate D=0.1 $h^{-1}$, a retention rate of R=0.90, a Glycerol concentration of 2 g/L and a formate concentration of 0.23 g/L. If substrate concentration is reduced (case 2) for reduced operational costs, this results in lower biomass concentration. Example 1 showed that low biomass concentration reduces the formate degradation capacity. To increase Biomass concentration, the cell retention rate can be increased (case 3). As a result of the higher retention rate, the specific growth rate is reduced according to Equation 5. Case 4 shows a process with an increased dilution rate in comparison to the basic process. As a result of the higher dilution rate, also the growth rate increases. However, example 1 showed that high dilution rates have a negative impact on the quality of the treated waste water. The examples in **Table** 2 illustrates that optimization of the process is always a balance between quality of the treated waste water on one hand and quantity as well as process costs on the other hand. Optimal setpoints for this process are low substrate concentration in feed, low amount of cell waste and high formate degradation rate.

**Table 1. Requirements of the process and its consequences.**

| Requirement | Action | Side effect |
|---|---|---|
| Low substrate expenditure | Low $s_{in}$ | Low x unless R is high |
| High formate degradation rate | High $\mu$ | Little *R* |
| Low cell waste | Low *Bleedflow* | High *R* |

**Table 2. Example for the control concept. Biomass concentration X and specific growth rate μ are controlled using Dilution rate D, retention rate R, substrate concentration $s_{in}$. To show the interdependencies of the parameters a basic process (1) is changed by different actions (2-4) (see Table 1). $Y_{Gly/S}$=0.54 g/g and $Y_{For/S}$=0.25 g/g is assumed for calculations.**

| | D [1/h] | R [ ] | $S_{in}$ [g/L] Glycerol | $S_{in}$ [g/L] Formate | μ [1/h] | X [g/L] | Description |
|---|---|---|---|---|---|---|---|
| *1)* | 0.1 | 0.85 | 5.0 | 0.23 | *0.015* | *18.5* | Basic process |
| *2)* | 0.1 | 0.85 | 2.5 | 0.23 | *0.015* | *9.4* | Low substrate expenditure, but low Biomass concentration |
| *3)* | 0.1 | 0.92 | 2.5 | 0.23 | *0.008* | *18.5* | High retention rate, but low growth rate |
| *4)* | 0.2 | 0.85 | 5 | 0.23 | *0.030* | *18.5* | Higher dilution rate, high growth rate, lower quality (See example 1) |

**Example 4: Degradation of formate, MDA (4,4'-Methylenedianiline), Nitrobenzene, Aniline and Phenol in actual residual water in continuous Bio-processing using cell retention** system

**Bioreactor setup with cell retention**

Continuous degradation of formate, MDA, Nitrobenzene, Aniline and Phenol in actual brine was performed using a cell retention system. The industrial brine was supplemented with media components given in table 1 and glycerol as co-substrate. The amount of glycerol in the medium was adjusted in such a way to achieve a specific growth rate of 0.026 h-1. Cultivation was established in the bioreactor as described for shake flask experiments. Fermentation in the bioreactor was performed at 450 rpm agitation and 37 °C. The cell retention system was set in the bioreactor using a polysulfone (PSU) hollow fiber microfiltration membrane cartridge having an area of 420 $cm^2$ and a pore size of 0.2 μm. Feed flows of 130 to 610 g/h led to a dilution rate of 0.1 to 0.6 $h^{-1}$. By adjusting the feed flow in relation to the cell containing bleed flow and the cell free harvest, a constant biomass in the fermenter could be achieved.

Turbidity as indicator for cell density and HPLC analytics of the residual formate, acetate and glycerol were measured during the entire process. Residual MDA, Nitrobenzene, Aniline and Phenol were also measured by HPLC. It was shown that the amounts of formate, MDA, Nitrobenzene, Aniline and Phenol were reduced.

**Claims**

**1.** A method for reducing the amount of organic compounds in wastewater, comprising

(a) providing or obtaining a wastewater comprising NaCl in a concentration of at least 6% (w/v),
(b) contacting said hypersaline wastewater with a halophilic microorganism, and
(c) reducing the amount of organic compounds by said halophilic microorganism in the presence of at least one

substrate which has been added to the wastewater and which allows for the continuous growth of said halophilic microorganism,

wherein the reduction of the amount of organic components is carried out as a continuous process in bioreactor.

**2.** The method of claim 1, wherein the halophilic microorganism is an extremely halophilic microorganism such as Haloferax mediterranei.

**3.** The method of claims 1 and 2, wherein the biomass concentration in the bioreactor is at least 10 g/l, in particular wherein the biomass concentration in the bioreactor is 20 g/l to 40 g/l.

**4.** The method of any one of claims 1 to 3, wherein the bioreactor is connected with a cell separation device which continuously separates the cells of the halophilic microorganism to obtain a filtrate of the treated wastewater, in particular wherein the cell separation device comprises a filter, in particular a membrane filter, which allows for the continuous separation of the cells of the halophilic microorganism from the first portion of the treated wastewater to obtain a filtrate of the treated wastewater.

**5.** The method of any one of claims 1 to 4, wherein total organic content of the hypersaline wastewater obtained or provided in step a) is lower than 400 mg/l.

**6.** The method of any one of claims 1 to 5, wherein the continuous process is controlled by the following parameters (i) concentration of the at least one substrate, (ii) recirculation rate R and (iii) dilution rate D.

**7.** The method of any one of claims 1 to 6, wherein

- the recirculation rate R is preferably 0.8 to 0.99, more preferably 0.9 to 0.99, and most preferably 0.9 to 0.95, and/or
- the dilution rate D is equal to or larger than 0.05 $h^{-1}$, in particular wherein the dilution rate is equal to or larger than 0.1 $h^{-1}$, and/or
- the continuous process is carried out under conditions which allow for a growth rate $\mu$ of the halophilic microorganism of larger than 0.008 $h^{-1}$, in particular of larger than 0.015 $h^{-1}$ .

**8.** The method of any one of claims 1 to 7, wherein the amount of at least one organic compound selected from the group consisting of nitrobenzene, formate, phenol, methylenedianiline, in particular 4,4'-Methylenedianiline (MDA), and aniline is reduced, and/or wherein the amount of total organic carbon (TOC) is reduced,
in particular wherein the amount of the at least one organic compound or of the total organic carbon is reduced by at least 30%, at least 50%, at least 70%, by least 90%, or by at least 95%.

**9.** The method of any one of claims 1 to 8, wherein the treated wastewater is concentrated after separation of the cells from the wastewater, and/or
wherein the continuous process further comprises subjecting the treated wastewater or the concentrated treated wastewater to sodium chloride electrolysis, thereby producing chlorine and sodium hydroxide and optionally hydrogen, in particular wherein the sodium chloride electrolysis is selected from membrane cell electrolysis of sodium chloride, in particular membrane electrolysis using oxygen consuming electrodes and diaphragm cell electrolysis of sodium chloride.

**10.** The method of claims of claim 9, wherein the bioreactor is connected via a cell separator to a device allowing for sodium chloride electrolysis of the treated wastewater.

**11.** A bioreactor comprising a hypersaline wastewater and at least one substrate which allows for the growth of cells of Haloferax mediterranei, wherein the biomass concentration of the cells of Haloferax mediterranei in the wastewater is a least 10 g/l.

**12.** The bioreactor of claim 11, wherein the bioreactor comprises at least 1000 l hypersaline wastewater.

**13.** The bioreactor of claims 11 and 12, wherein the biomass concentration in the bioreactor is at least 20 g/l.

**14.** The bioreactor of any one of claims 11 to 13, wherein the bioreactor is connected a cell retention device which

allows for continuously separating the cells from the wastewater to obtain a filtrate of treated wastewater.

**15.** A purification system comprising a bioreactor comprising a hypersaline wastewater and cells of at least one halophilic microorganism, said bioreactor being connected to a cell retention device which allows for continuously separating the cells from the wastewater to obtain a filtrate of treated wastewater, wherein said cell retention device is connected to a device allowing for sodium chloride electrolysis of the treated wastewater.

Fig. 1

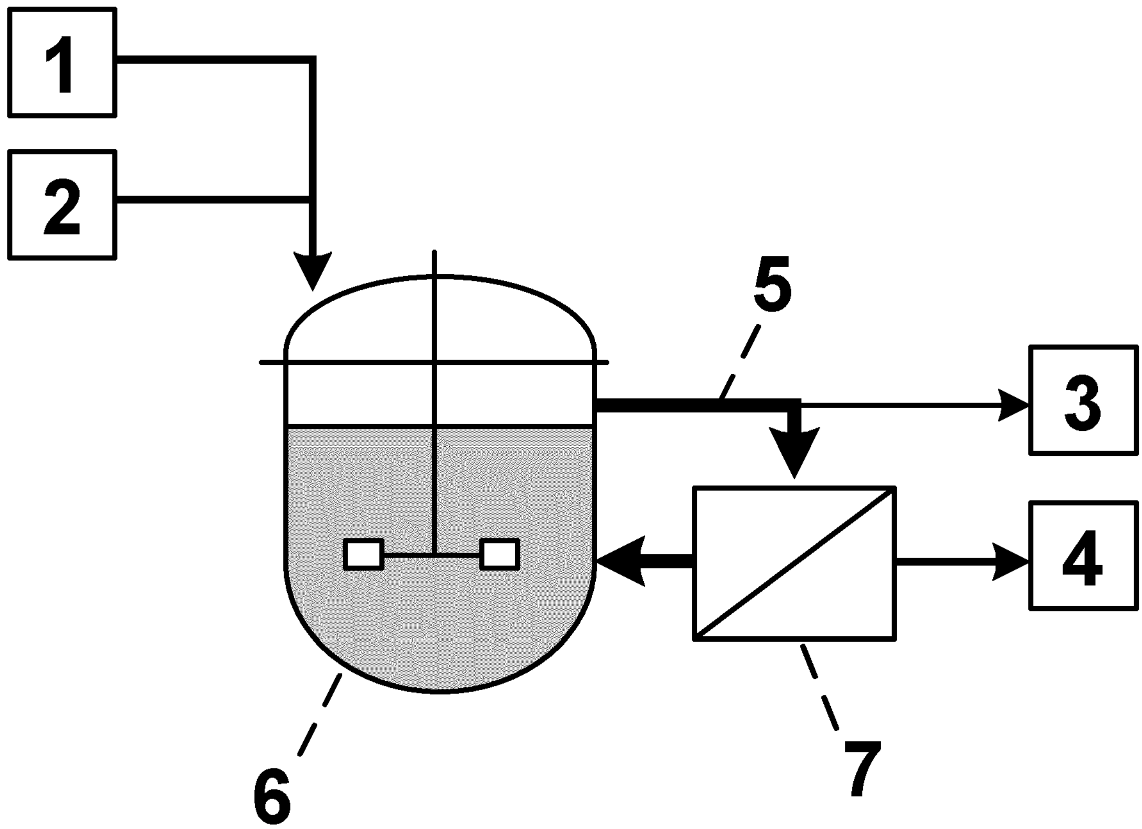

**Fig. 2**

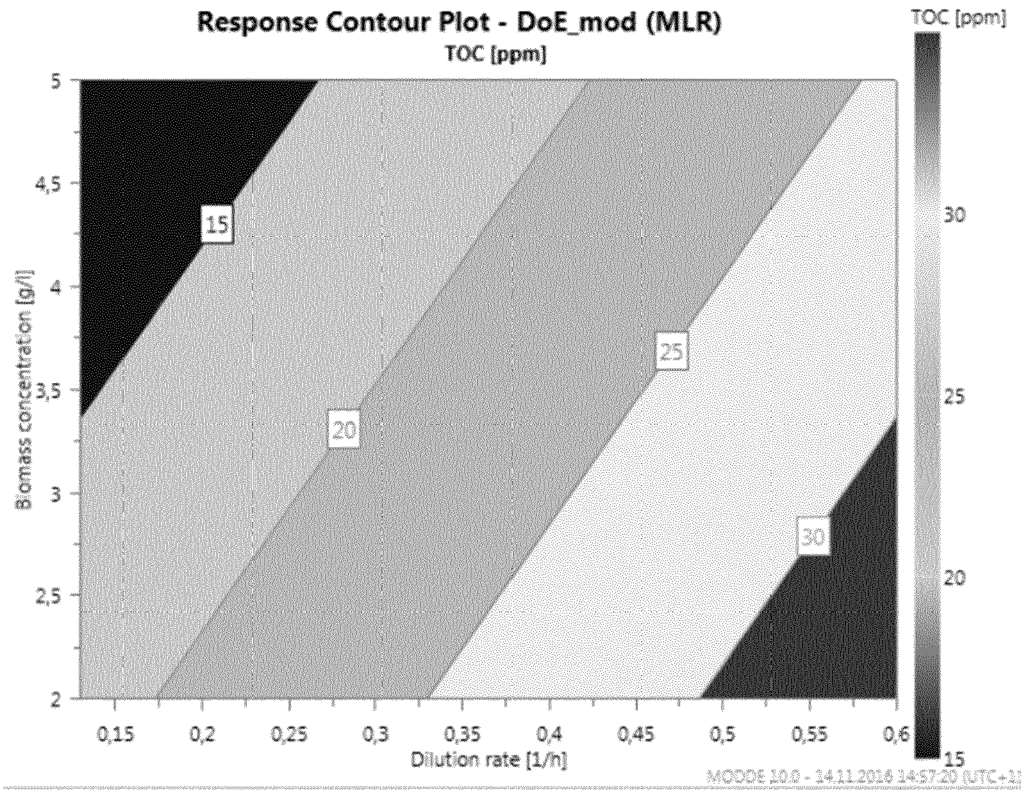
Response Contour Plot - DoE_mod (MLR)
TOC [ppm]
TOC [ppm]
Biomass concentration [g/l]
Dilution rate [1/h]
5
4,5
4
3,5
3
2,5
2
0,15
0,2
0,25
0,3
0,35
0,4
0,45
0,5
0,55
0,6
15
20
25
30
MODDE 10.0 - 14.11.2016 14:57:20 (UTC+1)

Fig. 3

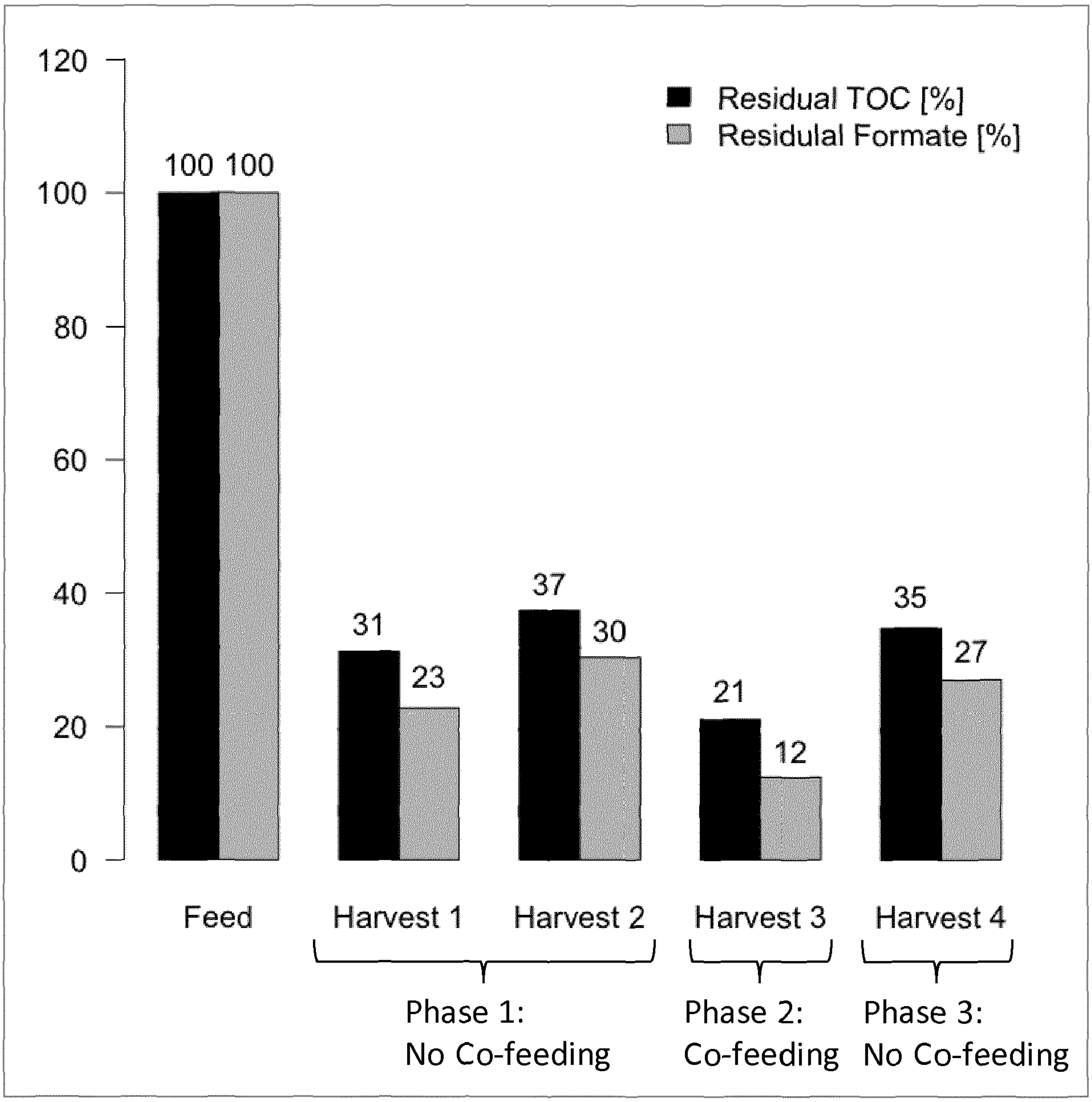
120
100
80
60
40
20
0
Residual TOC [%]
Residulal Formate [%]
100 100
31
23
37
30
21
12
35
27
Feed
Harvest 1
Harvest 2
Harvest 3
Harvest 4
Phase 1:
No Co-feeding
Phase 2:
Co-feeding
Phase 3:
No Co-feeding

Fig. 4

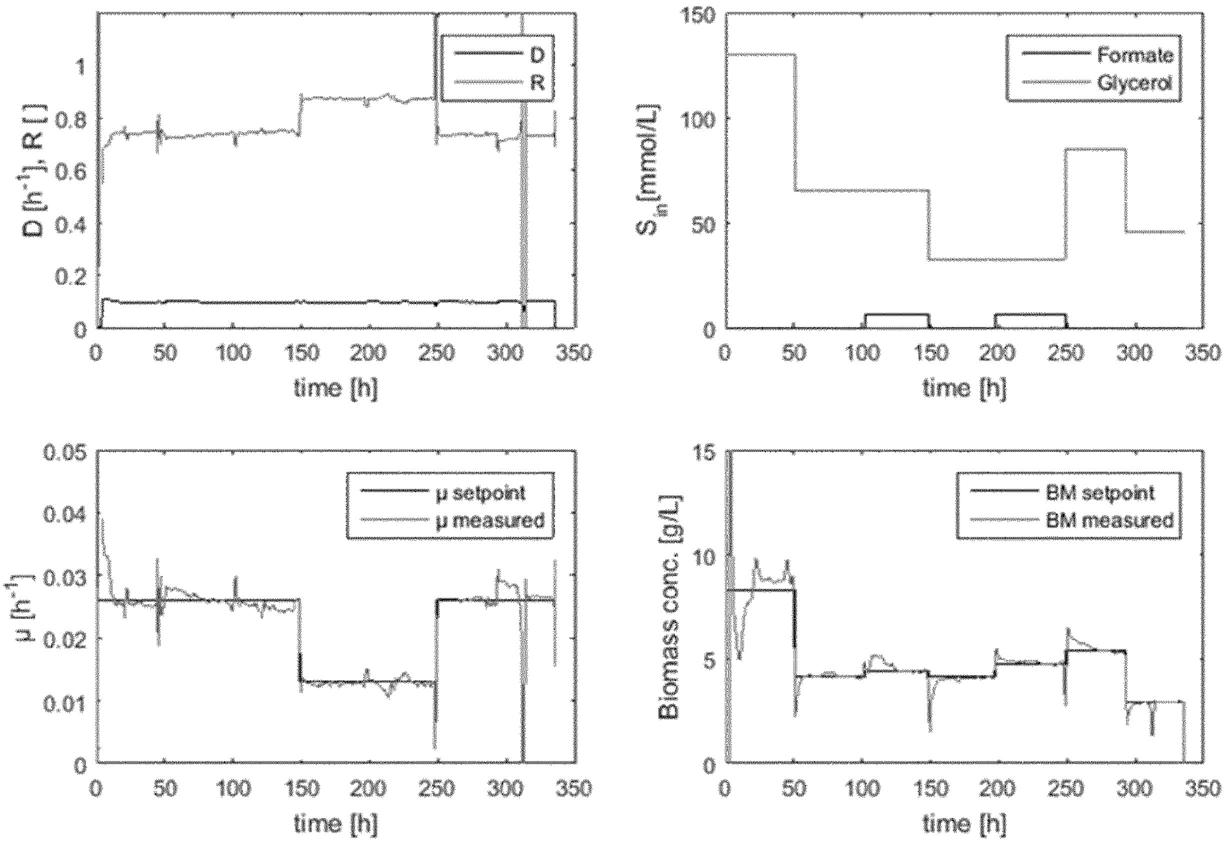
D
R
D [h-1], R [ ]
time [h]
Formate
Glycerol
S_in [mmol/L]
time [h]
μ setpoint
μ measured
μ [h-1]
time [h]
BM setpoint
BM measured
Biomass conc. [g/L]
time [h]

Europäisches Patentamt
European Patent Office
Office européen des brevets

# EUROPEAN SEARCH REPORT

Application Number
EP 17 20 8355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br>A | WO 2013/124375 A2 (THYSSENKRUPP UHDE GMBH [DE]) 29 August 2013 (2013-08-29)<br>* page 1, line 15 - line 17 *<br>* page 3, line 8 - page 6, line 5 *<br>* claims 1,2,4,5,6,9 *<br>----- | 1-10<br>11-15 | INV.<br>C02F3/12<br>C02F3/34<br><br>ADD.<br>C02F1/461<br>C02F103/34<br>C02F101/34<br>C02F101/38 |
| X,D<br><br>A | LORANTY ET AL.: "Investigation of physiological limits and conditions for robust bioprocessing of an extreme halophilic archaeon using external cell retention system",<br>BIOCHEMICAL ENGINEERING JOURNAL,<br>vol. 90, 17 June 2014 (2014-06-17), pages 140-148, XP029011213,<br>* 2.1, 2.2, 2.5, 3.3;<br>figures 1,3 *<br>* Table 2A, Table 2B;<br>page 144, right-hand column *<br>* page 141, left-hand column, line 28 - line 36 *<br>----- | 11-15<br><br>1-10 | |
| | | | TECHNICAL FIELDS SEARCHED (IPC) |
| | | | C02F |

The present search report has been drawn up for all claims

1

| Place of search | Date of completion of the search | Examiner |
|---|---|---|
| The Hague | 22 February 2018 | Du, Mingliu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 20 8355

This annex lists the patent family members relating to the patent documents cited in the above-mentioned European search report. The members are as contained in the European Patent Office EDP file on
The European Patent Office is in no way liable for these particulars which are merely given for the purpose of information.

22-02-2018

| Patent document cited in search report | Publication date | Patent family member(s) | Publication date |
|---|---|---|---|
| WO 2013124375 A2 | 29-08-2013 | EP 2631219 A1 | 28-08-2013 |
| | | EP 2817263 A2 | 31-12-2014 |
| | | WO 2013124375 A2 | 29-08-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013124375 A
- EP 1813598 A1
- US 2008053836 A
- WO 2000078682 A


### Non-patent literature cited in the description


- **ALSAFADI et al.** *N Biotechnol.,* 2017, vol. 34, 47-53
- **BHATTACHARYYA et al.** *AMB Express.,* 2012, vol. 2, 34
- **F.F. HEZAYEN et al.** *Appl Microbiol Biotechnol.,* 2000, vol. 54, 319-325
- **T.-Y. HUANG et al.** *J IND MICROBIOL BIOTECHNOL.,* 2006, vol. 33, 701-706
- **P.-J.R.S. YI-HSU JU et al.** *Journal of Microbial & Biochemical Technology.,* 2015, vol. 07
- **M. KOLLER.** *International Journal of Polymer Science,* vol. 2015 (2015), e370164
- **S.Y. LEE et al.** *Biotechnology Letters,* 1998, vol. 20, 763-765
- **FALLET et al.** *Biotechnol. Bioeng.,* 2010, vol. 107, 124-133
- **LORANTY et al.** Investigation of physiological limits and conditions for robust bioprocessing of an extreme halophilic archaeon using external cell retention system. *Biochemical Engineering Journal.,* 2014, vol. 90, 140-14
- **RODRIGUEZ-VALERA, F. ; JUEZ, G. ; KUSHNER, D. J.** Halobacterium mediterranei sp. nov., a new carbohydrate-utilizing extreme halophile. *Syst.Appl.Microbiol.,* 1983, vol. 4, 369-381
- **LE BORGNE ; D. PANIAGUA ; R. VAZQUEZ-DUHALT.** Biodegradation of Organic Pollutants by Halophilic Bacteria and Archaea. *Journal of Molecular Microbiology and Biotechnology*
- **PETER SCHMITTINGER.** CHLORINE. Wiley-VCH Verlag, 2000